# EUROPÄISCHE PATENTANMELDUNG

(11) **EP 0 824 969 A2**
(43) Veröffentlichungstag der Anmeldung: **25.02.1998**
(21) Anmeldenummer: 97111731.2
(22) Anmeldetag: 10.07.1997
(51) Int. Cl.: B04B 9/10, B04B 13/00

(54) **Steuerungssystem für eine Laborzentrifuge**

(30) Priorität: 16.08.1996 DE 19632965
(71) Anmelder: SIGMA LABORZENTRIFUGEN GmbH, 37520 Osterode (DE)
(72) Erfinder: Tödteberg, Eckhard, 37520 Osterode (DE)
(74) Vertreter: Sobisch, Peter, Dipl.-Ing.

(57) **Zusammenfassung**

Zur Erhöhung der Zuverlässigkeit und Betriebssicherheit des Steuerungssystems einer Laborzentrifuge, insbesondere zur Erkennung gefährlicher Betriebszustände wie z.B. einer Überdrehzahl gegenüber einer rotorspezifischen Höchstdrehzahl wird eine Steuerung vorgeschlagen, deren Kern aus zwei Prozessoren (4,5) besteht, wobei der eine (5) der beiden Prozessoren eingangsseitig mit einem Rotoridentifikationssignal und einem, die aktuelle Drehzahl des Antriebs (1) beschreibenden Signal beaufschlagt ist und wobei der andere (4) der beiden Prozessoren darüber hinaus zusätzlich mit allen übrigen, für die Steuerung des Zentrifugenbetriebs relevanten Signalen eingangsseitig beaufschlagt ist. Letzterer (4) dient unter anderem zur Drehzahl- und Drehmomentensteuerung des Antriebs (1) und - bei Auftreten einer Überdrehzahl - zum Abschalten des Antriebs (1), wohingegen der Prozessor (5) lediglich zum Abschalten des Antriebs (1) bei Auftreten einer Überdrehzahl eingerichtet ist. Beide Prozessoren (4,5) sind im Rahmen der Steuerung völlig unabhängig voneinander, werden hinsichtlich der Drehzahlüberwachung mit den gleichen Eingangssignalen beaufschlagt und sind ausgangsseitig zum bedingten Abschalten des Antriebs (1) eingerichtet. Durch die in funktionaler Hinsicht sehr einfache Einbindung des Prozessors (5) ergibt sich gegenüber bekannten Lösungen ein hinsichtlich der Betriebssicherheit, nämlich der Vermeidung gefährlicher Betriebszustände in sehr einfacher Weise verbessertes Steuerungssystem.

## Beschreibung

Die Erfindung bezieht sich auf das Steuerungssystem eines Zentrifugenantriebs entsprechend dem Oberbegriff des Anspruchs 1.

Laborzentrifugen sind im Regelfall mit unterschiedlichen Rotoren ausrüstbar, welche im Umfangsbereich mit Gefäßen bestückt sind, die ein, unter der Wirkung eines Zentrifugalkraftfeldes in seine Komponenten zu zerlegendes Stoffgemisch enthalten. Entsprechend den Eigenschaften des Stoffgemisches bzw. dessen Komponenten muß der Trennprozeß häufig unter Einhaltung jeweils stoffspezifischer Druck- und/oder Temperaturverhältnisse durchgeführt werden. In Anbetracht der relativ hohen Drehzahlen, unter denen die Rotoren betrieben werden und dem hiermit im Versagensfall verbundenen entsprechend hohen Gefahrenpotential für Personen und Sachen kommt der Ausbildung des Zentrifugenantriebs, insbesondere unter dem Aspekt der Sicherstellung einer jeweils rotorspezifischen Drehzahlbegrenzung eine besondere Bedeutung zu.

Es ist in diesem Zusammenhang bekannt, die Rotoren mit maschinenlesbaren, den Rotortyp beschreibenden Kodierungen zu versehen, welche durch das Steuerungssystem eingelesen und für den Rotorbetrieb genutzt werden. Die für einen Rotor geltende Höchstdrehzahl wird hierbei durch dessen Masse, jedoch auch durch dessen konstruktive Ausbildung bestimmt. Der Rotor befindet sich bei diesen Zentrifugen in einem Gehäuse, welches dahingehend ausgebildet ist, daß dieses einen definierten Schutz für die nähere Umgebung des Aufstellungsortes der Zentrifuge bietet.

Aus der WO 87/00770 A1 ist ein Steuerungssystem für einen Zentrifugenantrieb bekannt, der einen wechselrichtergespeisten Antrieb beinhaltet, wobei die Übertragung eines, die Drehzahl des Antriebs beschreibenden Signals im Fall des Auftretens einer Überdrehzahl unterbrochen wird. Letzterem Zweck dient ein Schaltkreis, der ausgehend von der kontinuierlichen Überwachung der Rotordrehzahl sowie dem Einlesen eines mit dem Rotor verbundenen, die jeweilige Höchstdrehzahl kodierenden Informationsträgers zur Feststellung einer Überdrehzahl bestimmt und ausgebildet ist. Tritt eine Überdrehzahl auf, führt dies über eine Gatterschaltung zur Unterbrechung eines, die Drehzahl des Antriebs beschreibenden Signals zu einer Wechselrichtereinheit und damit zur Abschaltung des Antriebs.

Aus der EP 0 314 754 B1 ist ein weiteres Steuerungssystem für einen Zentrifugenantrieb bekannt, welches insbesondere mit Hinblick auf die Berücksichtigung möglicher Bedienfehler, wie z.B. die Eingabe einer falschen höchstzulässigen Drehzahl des Rotors ausgerichtet ist. Zu diesem Zweck wird die Dynamik des Anlaufverhaltens eines Rotors zur Ermittlung des Massenträgheitsmoments benutzt und aus diesem nach Maßgabe definierter Gefahrenzustände wie z.B. einer Begrenzung der kinetischen Energie eine höchstzulässige Drehzahl errechnet, die dann, wenn sie unterhalb der bedienerseitig dem Steuerungssystem manuell eingegebenen Drehzahl liegt, der weiteren Steuerung zugrunde gelegt wird.

Nun stellt sich grundsätzlich bei allen elektrischen bzw. elektronischen Schaltkreisen die Frage der Zuverlässigkeit, insbesondere das Problem, Schadwirkungen im Falle des Versagens von Bauteilen in Grenzen zu halten oder idealerweise völlig zu verhindern.

Aus British Standards BS 4402:1982 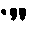 Specification for Safety requirements for laboratory centrifuges" sowie 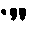 Handbuch für Hochfrequenz- und Elektrotechniker, Band 5, Dr. Alfred Hüthig Verlag Heidelberg 1981, Seite 79" ist es gleichermaßen bekannt, sicherheitsrelevante Teile elektronischer Schaltungen redundant auszubilden, und zwar dahingehend, daß jedes Teilsystem unabhängig vom Zustand des anderen seine sicherheitsrelevante Funktion erfüllen kann. Dieses Konzept basiert auf der Vorstellung, daß bei gegebener Ausfallwahrscheinlichkeit eines Bauteils die Wahrscheinlichkeit des gleichzeitigen Ausfalls von zwei oder mehr redundant vorgesehenen Bauteilen entsprechend vermindert ist, so daß auf diesem Wege ein höheres Maß an Zuverlässigkeit des Gesamtsystems herstellbar ist. Ähnliche Überlegungen finden sich auch in 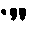 Mikrocomputer in der Sicherheitstechnik", Verlag TÜV Rheinland GmbH, Köln 1984, 7-4 bis 7-18. Hiernach werden die Sicherheitsstandards von Rechnersystemen durch zweikanalige Ausbildung der Rechnerstruktur erhöht, wobei es darauf ankommt, daß zwei unabhängige Funktionseinheiten zur Ausführung einer bestimmten Funktion vorgesehen sind. Die Funktionseinheiten können hierbei untereinander gleich oder auf verschiedene Weisen diversitär aufgebaut sein, z.B. im Sinne einer Hardware-Diversität, einer Software-Diversität oder einer Zeit-Diversität. Redundanz muß somit nicht stets zu hardwaremäßig identischen, mehrfach vorhandenen Strukturen führen.

So ist aus der US 4 903 191 ein Steuerungssystem für einen Zentrifugenantrieb bekannt, dessen Kern durch zwei Prozessoren gebildet wird, die für einen Teil der im Rahmen der Steuerung auszuführenden Steuerungsfunktionen in einem Master-Slave-Verhältnis konfiguriert sind und die beide unabhängig voneinander mit dem Signal eines Drehzahlgebers beaufschlagt werden und die ebenfalls unabhängig voneinander in Abhängigkeit vom Auftreten einer Überdrehzahl zur Abschaltung des Antriebs eingerichtet sind. Die sicherheitsrelevanten Bauelemente bzw. -gruppen, hier die beiden Prozessoren müssen somit nicht vollständig identisch sein.

Es ist die Aufgabe der Erfindung, ein Steuerungssystem der eingangs bezeichneten Art bei Wahrung der Zuverlässigkeit der Überwachung des Zentrifugenantriebs sowie seiner Betriebssicherheit zu vereinfachen. Gelöst ist diese Aufgabe bei einem solchen Steuerungssystem durch die Merkmale des Kennzeichnungsteils des Anspruchs 1.

Ausgangspunkt ist hiernach, daß die beiden, im Rahmen der Steuerung eingesetzten Prozessoren gleichermaßen zur Generierung eines, den Antrieb abschaltenden Signals bei Auftreten einer Überdrehzahl bestimmt und eingerichtet sind, so daß, nachdem beide Prozessoren eingangsseitig unabhängig voneinander mit einem, die aktuelle Drehzahl des Antriebs beschreibenden Signal beaufschlagt werden, insoweit eine redundante Auslegung des Steuerungssystems gegeben ist. Vorausgesetzt wird hierbei, daß ein zumindest den Rotortyp identifizierendes Signal beiden Prozessoren in irgendeiner Weise zugeleitet wird. Entscheidend ist, daß sämtliche übrigen Steuerungsfunktionen - von der bedingten Abschaltfunktion des Antriebs abgesehen - bei einem der beiden Prozessoren, dem 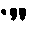 Hauptprozessor" konzentriert sind, so daß der andere Prozessor lediglich im Rahmen der Drehzahlüberwachung Verwendung findet. Erfindungswesentlich ist, daß die Funktionen beider Prozessoren werden völlig unabhängig voneinander abgewickelt werden, so daß Funktionsabläufe des einen Prozessors in keiner Beziehung zu solchen des anderen Prozessors stehen. Diese völlige Unabhängigkeit der Prozessoren voneinander bringt unter anderem den Vorteil mit sich, daß bestehende Steuerungssysteme, bei denen ein Prozessor zur Abwicklung sämtlicher Steuerungsfunktionen vorgesehen ist, in einfacher Weise im erfindungsgemäßen Sinne nachgerüstet werden können, um die Betriebssicherheit und Zuverlässigkeit des Steuerungssystems zu verbessern. Es ergibt sich jedoch der weitere wesentliche Vorteil, daß der zweite, lediglich bei Auftreten einer Überdrehzahl in Funktion tretende Prozessor sehr einfach ausgebildet sein kann und ausgangsseitig lediglich zur Generierung eines Ein-Aus-Signals eingerichtet sein muß. Unter dem Begriff Prozessor soll im weitesten Sinne jeder/jede, zur Signalverarbeitung geeignete, auch Speicherfunktionen erfüllende Schaltkreis bzw. Baugruppe verstanden werden, der/die im erfindungsgemäßen Sinne zur Umsetzung der beim Betrieb einer Laborzentrifuge anfallenden Steuerungsfunktionen geeignet ist. Das Steuerungssystem ermöglicht gegenüber einer einfachen Duplizierung eines Prozessors bzw. eines vernetzten Betriebs zweier Prozessoren eine bedeutend wirtschaftlichere Lösung der eingangs dargelegten Aufgabe, nämlich das Auftreten gefährlicher, auf einer Überdrehzahl beruhender Betriebszustände einer Zentrifuge zu vermeiden.

Der Rotor ist entsprechend den Merkmalen des Anspruchs 2 mit einem maschinenlesbaren Informationsträger versehen, der mittels eines Übertragers mit beiden Prozessoren in Verbindung steht. Wesentlich ist in diesem Zusammenhang, daß beide Prozessoren unabhängig voneinander eingangsseitig mit dem Ausgangssignal des Übertragers beaufschlagt werden. Auf diesem Wege kann beispielsweise eine den eingesetzten Rotortyp identifizierende Information den Prozessoren zugeleitet werden. Indem den Prozessoren diese sicherheitsrelevante Information automatisiert zugeführt wird, ist ein bedeutender Beitrag zur Vermeidung von nutzerseitigen Bedienfehlern gegeben, beispielsweise hinsichtlich der Eingabe einer überhöhten, für den tatsächlich eingesetzten Rotor unzulässigen Höchstdrehzahl. Beide Prozessoren werden unabhängig voneinander mit Informationen beaufschlagt, aus denen sich die jeweils rotorspezifische Höchstdrehzahl ergibt.

Entsprechend den Merkmalen des Anspruchs 3 steht der eingangs genannte Hauptprozessor mit einem Eingabewerk in Verbindung, welches gleichzeitig Anzeigefunktionen erfüllt, die dem Nutzer eine Reihe von den Zentrifugenbetrieb beschreibenden Zuständen sichtbar machen. Lediglich der genannte Hauptprozessor ist in diesen Funktionsbereich eingebunden, nicht hingegen der, lediglich im Fall des Auftretens einer Überdrehzahl in Funktion tretende 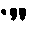 Nebenprozessor".

Entsprechend den Merkmalen des Anspruchs 4 wirken die Prozessoren im Falle des Auftretens einer Überdrehzahl über getrennte Leitungen auf den Antrieb ein. Diese Maßnahme unterstreicht die Unabhängigkeit der Funktionsfähigkeit der beiden Prozessoren voneinander, so daß beispielsweise Störungen im Bereich der Leitungen bzw. Kanäle des einen Prozessors keine Auswirkungen auf diejenigen des anderen Prozessors haben.

Im Fall der Abschaltung des Antriebs kann im einfachsten Fall der Rotor bis zum Stillstand auslaufen. Besonders vorteilhaft ist es gemäß den Merkmalen des Anspruchs 5 jedoch, im Fall der Abschaltung eine automatische Abbremsung des Rotors auszulösen, welcher in kürzestmöglicher Zeit dessen Stillstand herbeiführt. Gefährliche, sich aus einer Überdrehzahl des Antriebs ergebende Betriebszustände werden auf diesem Wege zeitlich äußerst begrenzt gehalten.

Der Schaltungseingriff in das Antriebssystem, welcher durch die Prozessoren im Fall des Auftretens einer Überdrehzahl ausgelöst wird, kann an unterschiedlichen Stellen erfolgen. Die Ansprüche 6 und 7 sind in diesem Zusammenhang auf Varianten gerichtet, gemäß welchen die Abschaltung bewirkt werden kann. Grundsätzlich können beide Prozessoren zum Eingriff in das Antriebssystem an der gleichen, jedoch auch an unterschiedlichen Stellen bestimmt und eingerichtet sein. Gemäß den Merkmalen des Anspruchs 6 steht der Nebenprozessor mit einem, auf dem Leistungsteil des Antriebs einwirkenden Schaltglied in Verbindung, welches eine Unterbrechung der Energiezufuhr zu dem Antrieb bewirkt. Diese Maßnahme unterstreicht die Einfachheit der Wirkungsweise des Nebenprozessors, der ausgangsseitig - wie oben bereits erwähnt - im Schadensfall lediglich ein Ein-Aus-Signal gewähren muß. Der Eingriff des Hauptprozessors kann in diesem Fall dadurch erfolgen, daß im Schadensfall eine Übertragung von Steuerimpulsen oder vergleichbaren Steuerfunktionen, die zur Ansteuerung beispielsweise eines Stromrichterantriebs erforderlich sind, unterbunden wird. Gemäß den Merkmalen des Anspruchs 7 hingegen erfolgt der Eingriff beider Prozessoren im wesentlichen an der gleichen Stelle des Antriebssystems, in dem nämlich im Schadensfall auf die Übertragung der genannten Steuerimpulse eingewirkt wird. Von Vorteil ist diese Variante, da ein entsprechendes, im Leistungsteil des Antriebssystems erforderliches Schaltglied, z.B. ein Schütz entfällt.

Weitere Ausgestaltungen des erfindungsgemäßen Steuerungssystems entsprechend den Merkmalen der Ansprüche 8 bis 12 betreffen die Überwachung des Betriebszustands der Prozessoren und der in die Erfassung der Drehzahl sowie die Generierung eines auf das Abschalten des Antriebs gerichteten Signals eingebundenen Leitungen. Ein Funktiosntest wenigstens eines der beiden Prozessoren, vorzugsweise des Nebenprozessors findet automatisch zu Beginn des Zentrifugenbetriebs` d.,h. bei Rotorstillstand statt und kann auch automatisch bei einem Rotorwechsel durchgeführt werden. Von der Feststellung der Fehlfunktion des wenigstens einen Prozessors kann eine Schaltfunktion abgeleitet werden, welche ein Anlaufen des Rotors blockiert. Das Steuerungssystem kann auch mit einer besonderen Prüfeinrichtung bzw. einem besonderen Prüfschaltkreis ausgerüstet sein, dessen Zweck lediglich in der Generierung von Testfuktionen besteht, mit denen die jeweils zu prüfenden Prozessoren beaufschlagt werden sowie in der Auswertung sich ergebender Antwortfunktionen, welche die Betriebsbereitschaft bzw. die fehlende Betriebsbereitschaft des Prozessors signalisieren. Mittels einer solchen Einrichtung, welche programmgesteuerte Prüfvorgänge auslösen kann, bleibt die Unabhängigkeit der beiden Prozessoren, die ihre Steuerungs- und Überwachungsaufgaben ohne wechselseitige Beeinflussung während des Betriebs abwickeln, unberührt.

Die Erfindung wird im folgenden unter Bezugnahme auf die in den Zeichnungen schematisch anhand von Blockschaltbildern wiedergegebenen Ausführungsbeispiele näher erläutert werden. Es zeigen:
Fig. 1 ein erstes Ausführungsbeispiel eines erfindungsgemäßen Steuerungssystem;
Fig. 2 ein zweites Ausführungsbeispiel eines erfindungsgemäßen Steuerungssystems.

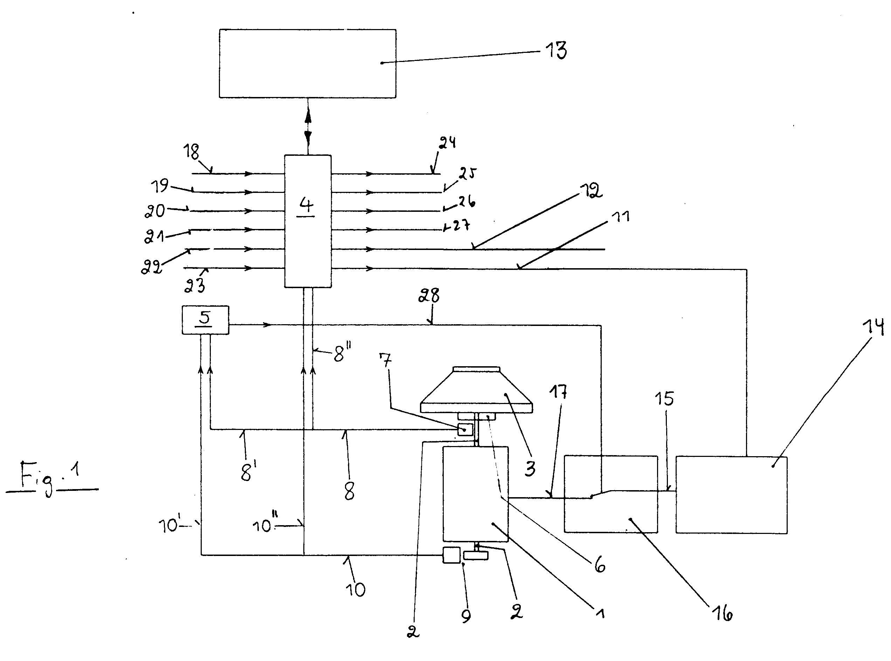

In Fig. 1 ist eine Laborzentrifuge vereinfacht durch ihren Antrieb 1 wiedergegeben, auf dessen Welle 2 ein Rotor 3 auswechselbar angeordnet ist. Der Rotor 3 ist im zeichnerisch nicht dargestellter Weise im Umfangsbereich mit Gefäßen ausrüstbar, welche das, durch Zentrifugation in Komponenten unterschiedlicher Dichte zu zerlegende Stoffgemisch enthalten. Es kann sich bei dem Antrieb 1 um einen stromrichtergesteuerten Wechsel- oder Gleichstromantrieb handeln.

Das, dem Antrieb 1 zugeordnete Steuerungssystem basiert im wesentlichen auf zwei Prozessoren 4, 5, deren unterschiedliche Funktionen im folgenden noch erläutert werden.

Der Rotor 3 ist unterseitig mit einem Informationsträger 6 versehen, der eine maschinell lesbare, zumindest den Rotortyp beschreibende Kodierung trägt. Diese Kodierung wird mittels eines Übertragers 7 berührungslos abgetastet und in vorzugsweise digitaler Form über eine Leitung 8 bzw. von dieser ausgehende Zweigleitungen 8', 8'' den Prozessoren 4, 5 gleichermaßen zugeführt. Anhand der, den Rotortyp identifizierenden Information kann unter anderem die für diesen erkannten Rotortyp höchstzulässige Drehzahl ermittelt werden, welche der Steuerung, insbesondere der Überwachung des jeweiligen Rotors zugrunde gelegt wird. Dies setzt voraus, daß einschlägige, die Zuordnung Rotortyp/höchstzulässige Drehzahl beinhaltenden Tabellenwerke in den Prozessoren 4, 5 gespeichert sind. Alternativ hierzu besteht jedoch auch die Möglichkeit, mittels des Informationsträgers 6 unmittelbar die für den eingesetzten Rotor höchstzulässige Drehzahl zu kodieren und diese Information über die Leitung 8 bzw. die genannten Zweigleitungen 8', 8'' den Prozessoren 4, 5 zuzuführen.

Mit 9 ist ein Drehzahlgeber bezeichnet, welcher der Welle 2 des Antriebs 1 zugeordnet ist und von welchem in vorzugsweise ebenfalls digitaler Form ein die tatsächliche Drehzahl der Welle 2 beschreibendes Signal über eine Leitung 10 und von dieser ausgehende Zweigleitungen 10', 10'' den Prozessoren 4, 5 zugeleitet wird. Somit stehen in beiden Prozessoren 4, 5 gleichermaßen Informationen betreffend die tatsächliche und die höchstzulässige Drehzahl des Rotors 3 zur Verfügung.

Entsprechend dem elektrischen Konzept des Antriebs 1 erfolgt die Steuerung dessen Drehmoments und dessen Drehzahl über eine kombinierte Spannungs- und Frequenzsteuerung, so daß der Prozessor 4 in Abhängigkeit entweder von einem gespeicherten Programm oder über einen nutzerseitig über ein Eingabewerk, beispielsweise eine Tastatur 13 vorgegebenen Verfahrensablauf diese Steuerungsaufgabe abwickelt. Er weist zu diesem Zweck ausgangsseitig Leitungen 11 zur Übertragung eines Frequenz- bzw. Drehzahlsignals und 12 zur Übertragung eines Spannungssignals auf. In Abhängigkeit von dem jeweiligen Trennverfahren wird somit über die Leitung 11 ein Frequenzsignal auf eine Baugruppe 14 übertragen, z.B. einen Impulserzeuger bzw. eine Wechselrichtereinheit, die ausgangsseitig über eine Leitung 15, ein Schaltglied 16 und eine weitere Leitung 17 den Antrieb 1 mit einer, der jeweiligen Verfahrenssituation angepaßten Spannung entsprechender Frequenz beaufschlagt.

Der Prozessor 4 dient ferner der Umsetzung zahlreicher weiterer Steuerungsfunktionen, welche die Sicherheit des Zentrifugenbetriebs, jedoch auch den Trennprozeß beeinflussen. Lediglich beispielhaft sind in diesem Zusammenhang weitere Eingangsleitungen 18 bis 23 für die Temperatur des Innenraums des nicht gezeigten Gehäuses der Zentrifuge, eine Kühlkörpertemperatur, eine Kammerübertemperatur, den Verriegelungszustand eines Deckelschlosses, eine Unwucht und dergleichen bezeichnet. Der Betriebsparameter Unwucht beispielsweise signalisiert während des laufenden Betriebs einen potentiellen Gefahrenzustand, der über den Prozessor 4 zur unmittelbaren Abschaltung des Antriebs 1 durch Generierung eines entsprechenden Frequenzsignals über die Leitung 11 führt. Wird über die Leitung 21 ein nicht ordnungsgemäß verriegeltes Deckelschloß des Zentrifugengehäuses signalisiert, wird dieser Betriebszustand über den Prozessor 4 unter anderem dahingehend umgesetzt, daß ein Anlaufen der Zentrifuge blockiert wird. Die Parameter Temperatur, Kühlkörpertemperatur und Kammerübertemperatur signalisieren Betriebszustände des Trennverfahrens, welche sich jeweils nach den Eigenschaften der zu trennenden Stoffe richten. Auch über diese können potentielle Gefahrenzustände zumindest für die im Rahmen des Trennverfahrens zu behandelnden Stoffe signalisiert werden.

Die über die Eingangsleitungen signalisierten Betriebsparameter werden über Ausgangsleitungen 24 bis 27 zu Steuerungs- und Signalisierungsfunktionen umgesetzt. So zeigen die, über die Ausgangsleitungen 24, 25 übertragenen Signale jeweils an, ob der Deckel des Zentrifugengehäuses offen oder geschlossen ist. Dieser Betriebszustand kann im Rahmen der Tastatur 13, welche gleichzeitig ein Datensichtfeld mit entsprechenden Anzeigeelementen aufweist, visualisiert werden. Die Ausgangsleitungen 26, 27 dienen hingegen der Steuerung eines Lüfters sowie einer Kühlmaschine, so daß auf diesem Wege die Kammertemperatur beinflußbar ist, beispielsweise um einer ansteigenden Temperatur der Gehäusekammer entgegenzuwirken.

Ein regulärer störungsfreier Betrieb der Laborzentrifuge ist dadurch gekennnzeichnet, daß nutzerseitig über die Tastatur 13 beispielsweise der Rotortyp der Steuerung eingegeben wird, wobei unter anderem diese Informationen dem Prozessor 4 übertragen werden. Unabhängig hiervon werden die, auf dem Informationsträger 6 kodierten diesbezüglichen Informationen eingelesen, wobei der Antrieb 1 unter anderem nach Maßgabe dieser Parameter gesteuert wird. Ein Bedienfehler, beispielsweise die Eingabe des falschen Rotortyps wird mittels den Informationsträger 6 erkannt, führt zu einer dementsprechenden Fehlermeldung der Steuerung und kann zum sofortigen Abbremsen des Rotors benutzt werden.

Kommt es - aus welchen Gründen auch immer - zu einer im Verhältnis zu der rotorspezifischen Drehzahl überhöhten Drehzahl des Antriebs 1, führt dies über den Prozessor 4 und die Ausgangsleitung 11 zu entsprechenden Eingriffen und gegebenenfalls zu einem Abschalten des Antriebs 1 durch Generierung eines dementsprechenden Ausgangssignals über die Leitung 11.

Der Prozessor 5 ist gleichermaßen zur Erkennung einer Überdrehzahl aufgrund der Leitungen 8', 10' eingerichtet und dazu bestimmt, um im Fall einer festgestellten Überdrehzahl über seine Ausgangsleitung 28 ein Signal zu generieren, welches auf das Schaltglied 16 einwirkt und eine unmittelbare Abschaltung des Antriebs 1 auslöst. Der Eingriff des Prozessors 5 erfolgt somit an einer anderen Stelle der Regelungs- bzw. Steuerungskette und ist lediglich zu einem Abschalten des Antriebs 1 eingerichtet. Ein Abschalten des Antriebs 1, unabhängig davon, ob dies über den Prozessor 4 oder den Prozessor 5 geschieht, sollte jedoch zweckmäßigerweise mit einer Abbremsung verbunden sein, um einen fehlerhaften Zentrifugenbetrieb schnellstmöglich zu beenden.

Der Prozessor 5 ist somit nicht zur Regelung des Antriebs 1 nach Maßgabe eines stoffspezifischen Trennprogramms eingerichtet sondern fungiert lediglich als 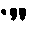 Notausschalter" im Fall der Feststellung einer Überdrehzahl. Dies bedeutet, daß der Prozessor 5 verhältnismäßig einfach ausgebildet werden kann. Er steht in keiner steuerungstechnischen Verbindung mit dem Prozessor 4 und ist somit als vergleichsweise einfaches Zusatzsystem anzusehen, mit welchem Zentrifugensteuerungen zwecks Erhöhung der Zuverlässigkeit und der Betriebssicherheit nachgerüstet werden können. Gemeinsamkeiten mit dem Prozessor 4 bestehen lediglich in den gemeinsamen, über die Leitungen 8, 10 übertragenen Eingangssignalen.

Man erkennt aus obigen Ausführungen, daß das erfindungsgemäße Steuerungssystem einen sehr einfachen Aufbau aufweist und mit geringem Aufwand die Betriebssicherheit des Zentrifugenantriebs hier im Falle des Versagens des Prozessors 4 verbessert.

Bei dem Ausführungsbeispiel gemäß Fig. 1 wird davon ausgegangen, daß eine Abschaltung des Antriebs im Fall deren Auslösens durch den Prozessor 4 durch einen Eingriff in die Baugruppe 14, beispielsweise eine Wechselrichtereinheit erfolgt, so daß der Abschaltvorgang durch unterbleibende Steuerimpulse und nicht durch einen Eingriff in den Leistungskreis des Antriebs erfolgt. Im Fall eines Abschaltens durch den Prozessor 5 hingegen erfolgt der Eingriff über ein Schaltglied 16, welches praktisch durch einen Eingriff in den Leistungskreis des Antriebs realisiert sein kann. Eine Ausschaltung des Antriebs 1 nach Maßgabe dieser Eingriffsmöglichkeiten ist jedoch nicht zwingend. Zur Erläuterung einer Variante hierzu wird im folgenden auf die Zeichnungsfigur 2 Bezug genommen, bei welcher Funktionselemente, die mit denjenigen der Fig. 1 übereinstimmen, entsprechend beziffert sind, so daß auf eine diesbezügliche wiederholte Beschreibung verzichtet werden kann.

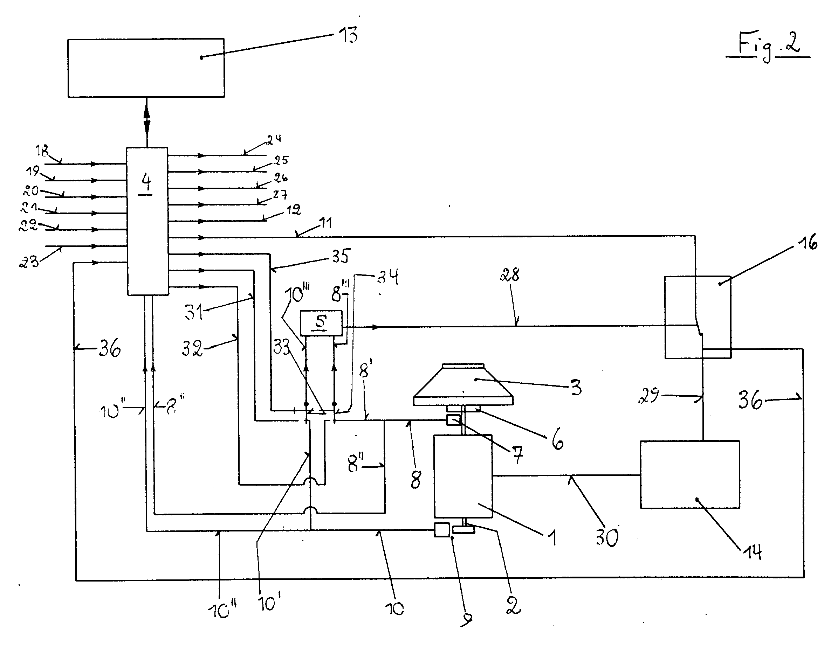

Wesensmerkmal des in Fig. 2 gezeigten Konzepts ist, daß das Schaltglied 16 eingangsseitig unmittelbar von den Prozessoren 4, 5 über deren Leitungen 11, 28 beaufschlagbar ist, wobei das Schaltglied 16 seinerseits ausgangsseitig über eine Leitung 29 mit der Baugruppe 14, z.B. einer Wechselrichtereinheit in Verbindung steht. Bei regulärem Betrieb werden über die Leitung 11 die zur Steuerung des Antriebs 1, insbesondere zur Einstellung einer bestimmten Drehzahl erforderlichen Steuerimpulse übertragen, welche über das Schaltglied 16 zu der Baugruppe 14 gelangen. Die Einwirkungsmöglichkeit des Prozessors 5 über die Leitung 28 ist derart beschaffen, daß der Fluß dieser Steuerimpulse über das Schaltglied 16 unterbunden werden kann. Beide Prozessoren 4, 5 wirken somit bei Ausübung einer Schaltfunktion dahingehend auf den Antrieb 1 ein, daß für den Fall des Abschaltens die Übertragung von Ansteuerimpulsen auf die Baugruppe 14 bzw. eine Wechselrichtereinheit unterbunden wird. Es wird somit auf einen unmittelbaren Eingriff in dem Leistungskreis des Antriebs 1, welcher die Anordnung entsprechender Schaltelemente, z.B. eines Schützes erforderlich machen würde, verzichtet.

Mit 30 ist eine, die Baugruppe 14 mit dem Antrieb 1 verbindende Leitungsgruppe bezeichnet.

Mit 31, 32 sind Leitungen bezeichnet, die als Ausgangsleitungen des Prozessors 4 jeweils mittels Schaltern 33, 34 mit Leitungselementen 8''', 10''' verbindbar sind. Mit 35 ist eine weitere Ausgangsleitung des Prozessors 4 bezeichnet, mittels welchem die Schalter 33, 34 zeitgleich betätigbar sind.

Die Zeichnung zeigt die Schalter 33, 34 in einer Stellung, in welcher zwischen den Leitungen 10', 10''' einerseits sowie 8', 8''' andererseits eine elektrisch durchgängige Verbindung besteht, so daß die Leitungen 31, 35 funktionslos sind. Es ist dies die reguläre Betriebsstellung, in welcher über die Leitungen 8, 10 beide Prozessoren 4, 5 sowohl mit einem, den eingesetzten Rotortyp identifizierenden Signal und einem, die aktuelle Drehzahl beschreibenden Signal eingangsseitig beaufschlagt werden.

Zur Durchführung eines Funktionstests der Prozessoren 4, 5 werden mittels der Leitung 35, somit durch den Prozessor 4 initiiert, zunächst die Schalter 33, 34 umgeschaltet, so daß eine Verbindung zwischen den Leitungen 31, 10''' sowie, 32, 8''' aufgebaut wird. In dieser Schaltphase sind somit die Leitungen 8', 10' funktionslos. Die Funktionsfähigkeit des Prozessors 5 kann nunmehr dadurch getestet werden, daß über die Leitungen 31, 32 ein die höchstzulässige Drehzahl des Rotors 3 beschreibendes Signal und ein, eine Drehzahl oberhalb der höchstzulässigen Drehzahl beschreibendes Signal dem Prozessor 5 über die Leitungen 8''', 10''' übertragen werden, woraufhin der Prozessor 5 über die Leitung 28 im Falle seiner Funktionsfähigkeit ein Abschaltsignal generieren müßte, wobei ein, das Vorhandensein bzw. das Nichtvorhandensein einer solchen Schaltfunktion beschreibendes Signal über eine, das Schaltglied 16 mit dem Prozessor 4 verbindende Leitung 36 dem Prozessor 4 zugeleitet wird. Führt dieser Funktionstest zu der Feststellung, daß eine einwandfreie Funktion des Prozessors 5 nicht gegeben ist, kann dieser Zustand zur Generierung einer Fehlermeldung und/oder zur Abschaltung des Antriebs 1 mittels des Prozessors 4 benutzt werden. Dieser Funktionstest wird während des Stillstands des Zentrifugenantriebs durchgeführt und es besteht im übrigen keinerlei steuerungstechnische Verbindung zwischen den Prozessoren 4, 5.

## Patentansprüche

1. Steuerungssystem für den Antrieb (1) einer Laborzentrifuge, wobei dem Antrieb (1) ein Drehzahlgeber (9) zugeordnet ist, dessen Ausgangssignal die Ist-Drehzahl des Rotors (3) der Zentrifuge beschreibt, wobei der Antrieb (1) in Abhängigkeit vom Auftreten einer Überdrehzahl gegenüber einer rotorspezifischen Höchstdrehzahl abschaltbar ist, wobei zur Verarbeitung des Ausgangssignals des Drehzahlgebers (9) zwei Prozessoren (4, 5) vorgesehen sind, deren jeder unabhängig von dem anderen eingangsseitig mit dem genannten Ausgangssignal beaufschlagt ist und wobei die Prozessoren (4, 5) unabhängig voneinander zur Abschaltung des Antriebs (1) eingerichtet sind,
dadurch gekennzeichnet,
- daß der eine (5) der beiden Prozessoren (4, 5) ausschließlich zur Generierung eines, den Antrieb (1) abschaltenden Signals bei Auftreten einer Überdrehzahl bestimmt und eingerichtet ist und
- und daß der andere (4) der beiden Prozessoren (4, 5) neben der Drehzahlregelung des Antriebs (1) und der Generierung eines, den Antrieb (1) abschaltenden Signals bei Auftreten einer Überdrehzahl zur Ausführung sämtlicher übriger Steuerungsfunktionen der Zentrifuge bestimmt und eingerichtet ist.

2. Steuerungssystem nach Anspruch 1,
dadurch gekennzeichnet,
- daß der Rotor (3) mit einem maschinenlesbaren Informationsträger (6) versehen ist,
- daß dem Informationsträger (6) ein Übertrager (7) zugeordnet ist und
- daß jeder Prozessor (4, 5) eingangsseitig unabhängig von dem anderen mit dem Ausgangssignal des Übertragers (7) beaufschlagt ist.

3. Steuerungssystem nach Anspruch 1 oder 2,
dadurch gekennzeichnet,
- daß der Prozessor (4) mit einem Eingabewerk (13) in Wirkverbindung steht.

4. Steuerungssystem nach einem der vorangegangenen Ansprüche 1 bis 3,
dadurch gekennzeichnet,
- daß die Prozessoren (4, 5) mit Hinblick auf die Ausübung einer Abschaltfunktion ausgangsseitig über getrennte Leitungen (11,28) bzw. Kanäle mit dem Antrieb (1) in Wirkverbindung stehen.

5. Steuerungssystem nach einem der vorangegangenen Ansprüche 1 bis 4,
dadurch gekennzeichnet,
- daß eine Einrichtung bzw. ein Schaltkreis zum automatischen Abbremsen des Antriebs (1) vorzugsweise bis zum Stillstand vorgesehen ist, welche/welcher durch das Signal zum Abschalten bei Auftreten einer Überdrehzahl aktivierbar ist.

6. Steuerungssystem nach Anspruch 4 oder 5,
dadurch gekennzeichnet,
- daß zum Eingriff des Ausgangssignals des Prozessors (5) in den Leistungskreis des Antriebs (1) ein besonderes Schaltglied (16) vorgesehen ist, welches zur Unterbrechung der Energiezufuhr zu dem Antrieb (1) bei Auftreten einer Überdrehzahl eingerichtet ist.

7. Steuerungssystem nach Anspruch 4 oder 5,
gekennzeichnet durch
- ein eingangsseitig mit den Prozessoren (4, 5) über die Leitungen (11, 28)in Verbindung stehendes, zur Übertragung von Steuerimpulsen oder sonstigen Steuersignalen, zu einer Wechselrichtereinheit des Antriebs (1) eingerichtetes Schaltglied (16), welches zur Unterbrechung der Übertragung der Steuerimpulse oder dergleichen bei Auftreten einer Überdrehzahl eingerichtet ist.

8. Steuerungssystem nach einem der Ansprüche 1 bis 7,
dadurch gekennzeichnet,
- daß eine Einrichtung bzw. ein Schaltkreis zur Prüfung der Betriebsbereitschaft wenigstens eines der Prozessoren (4,5) sowie der diese mit dem Antrieb (1) verbindenden Leitungen bzw. Kanäle vorgesehen ist.

9. Steuerungssystem nach Anspruch 8,
dadurch gekennzeichnet,
- daß die Einrichtung bzw. der Schaltkreis während einer Testphase zu Beginn des Zentrifugenbetriebs automatisch aktivierbar eingerichtet ist.

10. Steuerungssystem nach Anspruch 8 oder 9,
dadurch gekennzeichnet,
- daß die Einrichtung bzw. der Schaltkreis nach einem Rotorwechsel automatisch aktivierbar eingerichtet ist.

11. Steuerungssystem nach Anspruch 8 oder 9
dadurch gekennzeichnet
- daß zur Durchführung eines Funktionstests der Prozessor (5) mittels Schaltern (33, 34) von dem Antrieb (1) abkoppelbar und eingangsseitig mit Testfunktionen beaufschlagbar ist, aus deren Antwortfunktionen die Betriebsbereitschaft des Prozessors (5) ableitbar ist.

12. Steuerungssystem nach Anspruch 11,
dadurch gekennzeichnet,
- daß der Prozessor (4) sowohl zur Generierung der Testfunktionen als auch zur Auswertung der Antwortfunktionen bestimmt und eingerichtet ist.
